# EUROPEAN PATENT APPLICATION

(11) **EP 2 493 235 A1**
(43) Date of publication of application: **29.08.2012**
(21) Application number: 11290104.6
(22) Date of filing: 25.02.2011
(51) Int. Cl.: H04W 16/02, H04W 72/12

(54) **Scheduling of data on shared radio resources**

(71) Applicant: Alcatel Lucent, 75007 Paris (FR)
(72) Inventor: Fahldieck, Torsten, 71254 Ditzingen (DE)
(74) Representative: Rupp, Stefan Uli

(57) **Abstract**

The invention relates to a method for scheduling data flows (FL_{A,J}, FL_{B,J}) of at least two operators (OP_{A}, OP_{B}) sharing the same radio resources (RR), in particular sharing the same frequency spectrum, the method comprising: assigning an exclusive amount (PRB_{EX,A}, PRB_{EX,B}) of the radio resources (RR) to each of the operators (OP_{A}, OP_{B}), each exclusive amount (PRB_{EX,A}, PRB_{EX,B}) to be used for scheduling data flows (FL_{A,J}, FL_{B,J}) of only a single operator (OP_{A}; OP_{B}), and assigning a shared amount (PRB_{S}) of the radio resources (RR) to the operators (OP_{A}, OP_{B}), the shared amount (PRB_{S}) being used for scheduling data flows (FL_{A,J}, FL_{B,J}) of different operators (OP_{A}, OP_{B}), wherein the data flows (FL_{A,J}, FL_{B,J}) of the at least two operators (OP_{A}, OP_{B}) are scheduled using at least the exclusive amounts (PRB_{EX,A}, PRB_{EX,B}) of the radio resources (RR) assigned to the operators (OP_{A}, OP_{B}). The invention also relates to a base station (BS) for performing the scheduling, and to a wireless communications network (1).

## Description

### Field of the Invention

The invention relates to the field of telecommunications, and, more specifically, to scheduling mechanisms for scheduling data flows of different operators sharing the same radio resources.

### Background

This section introduces aspects that may be helpful in facilitating a better understanding of the invention. Accordingly, the statements of this section are to be read in this light and are not to be understood as admissions about what is in the prior art or what is not in the prior art.

To improve efficiency and to reduce costs in wireless networks, it becomes more and more popular to share resources. The sharing of resources may be accomplished in different ways. One feasible way is to share the infrastructure of a mobile network, respectively, the base stations and/or the backhaul network. The other opportunity is to share the radio spectrum. Furthermore, both of these may be combined.

The sharing of the base stations provides several advantages. However, beside these advantages, there are also drawbacks. If two or more operators share one base station, they are limited to the same set of functions and features of this particular base station and it is difficult for the operators to differentiate between each other. To give mobile network operators a maximum degree of freedom to setup and maintain their own feature set and take benefit of improved efficiency of shared resources, the concept of virtual base stations has been established.

The principle of base station virtualization is that one physical base station hosts two or more virtual base stations. Every operator owns its own virtual base station and may run its own operational software on this virtual base station. This gives the operator the opportunities to establish individuals services, use his own quality of services types, and so on.

In a legacy case where the base station and the licence spectrum is owned by one operator, the scheduler assigns the data for the different users according to the quality of service (QoS) constrains and the actual channel conditions, e.g. frequency selective scheduling. If several operators share the same infrastructure, e.g. the same base station, and the same radio resources (e.g. the same frequency spectrum), the scheduling mechanisms in the base station have additional scheduling constrains regarding business relations between the operators.

The current solution for infrastructure and spectrum sharing is MVNO (Mobile Virtual Network Operator). In this solution the operators which share the same infrastructure and/or spectrum have to use the same scheduling mechanisms because they use the same base stations. Furthermore, assignment of the radio resources between different operators depends on physical channel conditions and traffic constraints of the user data flows. This may lead to unfair radio resource assignments.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for scheduling data flows of at least two operators sharing the same radio resources, in particular sharing the same frequency spectrum, the method comprising: assigning an exclusive amount of the radio resources to each of the operators, each exclusive amount to be used for scheduling data flows of only a single operator, and assigning a shared amount of the radio resources to the operators, the shared amount being used for scheduling data flows of different operators, wherein the data flows of the at least two operators are scheduled using at least the exclusive amount of the radio resources assigned to the operators.

The overall available radio resources, e.g. the overall available frequency spectrum, is divided into a plurality (at least two) exclusive amounts, one for each operator. Typically, the radio resources are attributed to the operators based on the smallest entity of radio resources of a given radio technology, e.g. a physical resource block in case of LTE standard(s). The amount of radio resources may be defined as a fraction (e.g. in %) of the overall number of PRBs, this amount also being referred to as PRB credits in the following. Of course, in other Wireless technologies like WiMAX, different resource units will have to be used. One skilled in the art will also appreciate that the scheduling of data flows is performed using a scheduling interval, i.e. a time slot which is specific to the radio technology used by the operators. For instance, in LTE, a time slot corresponds to one sub-frame.

During the scheduling time slot, in case that the exclusive amount reserved for an operator is sufficient, all data flows originating from that operator are scheduled only in the exclusive amount of resources reserved for that operator. In this way, the data may be scheduled according to the business relationships and regulations of the different operators which use the base station, taking the actual channel conditions into account.

In one variant, in case that the exclusive amount of the radio resources assigned to an operator is insufficient, data flows of that operator are also scheduled in the shared amount of the radio resources. In other words, when the exclusive PRB credits are used up, shared PRB credits are used to schedule the data flows of that specific operator. It will be understood, however, that in an extreme case, the exclusive amounts attributed to different operators may add up to 100 %, so that shared amount of the radio resources is zero.

In a further variant, the data flows of each operator are scheduled in accordance with a priority identifier information associated with the data flows, the priority identifier information being provided by the operators. In this case, the scheduling is based on a two tier scheduling: An upper layer scheduler is provided for each operator, the upper layer scheduler being responsible for scheduling the end user traffic flows of a specific operator and may be implemented e.g. in a virtual base station of that operator. The upper layer scheduler may schedule the data flows of that operator according to the quality of service constrains of the data flows, the buffer level and e.g. an abstract transfer condition ATC which is reported by the physical domain.

The upper layer scheduler may be implemented as a round robin, proportional fair or other scheduler. According to the scheduling decision, the transferred data is packetized and tagged with a priority identifier. The priority identifier is a function of the QoS constrains, buffer level and/or ATC. The mechanisms used in the upper layer scheduler, in particular the virtual scheduler of the virtual base station, will not be described in greater detail herein. However, it should be noted that the concept of one virtual base station per operator gives the operator a maximum degree of freedom to install his own scheduling mechanisms for an optimal support of his specific services.

After the completion of the scheduling decision, the data flows are transferred together with the priority identifier to the physical domain for further processing in a lower layer scheduler (physical domain scheduler). The priority identifier is the primary index for the scheduling of the physical domain scheduler. For a given operator, the data flow with the highest priority identifier is scheduled first and the data flow with lowest priority identifier is scheduled last. This guarantees that the data is scheduled according to the decisions of the upper layer scheduler.

Despite the upper layer scheduler, the lower layer (physical) scheduler has to schedule the data according to the business relationships and regulations of the different operators which use the base station and the actual channel conditions. Consequently, with the scheduling mechanisms proposed herein, it is guaranteed that an operator gets the amount of radio resources he has paid for, independent of quality of service constraints or physical channel conditions. Thus, it is not possible for an operator to set up traffic priorities which would give him a gain over the other operator(s), so that a fair distribution of the available radio resources among the operators may be provided.

In one variant, the shared amount comprises an equally shared portion which is used for scheduling data flows of different operators with equal priority. In the equally shared portion of the shared amount of radio resources, the scheduling is performed only based on the priority identifier information element provided by the upper layer scheduler, i.e. the radio resources in this portion are scheduled in an equal manner among the operators.

In a further variant, the shared amount comprises at least one priority shared portion which is used for scheduling data flows of different operators based on a priority defined for each operator. In a priority shared portion of the shared amount of radio resources, the resource credits are shared in a prioritized manner among the operators, i.e. the data flows of the operator with the highest priority are scheduled first. For a given operator, the data is scheduled according to the priority identifier information of the upper layer scheduler of that operator. It will be understood that two or more priority shared portions may be set up, each with a different attribution of priorities to the operators.

Moreover, one skilled in the art will appreciate that the shared amount of resources may comprise both an equally shared portion and at least one priority shared portion. However, it is also possible that the shared amount of resources only comprises a priority shared portion and no equally shared portion, or vice versa.

In another variant, the method further comprises: in case that an exclusive amount of radio resources is not filled with data flows of the operator to which it is assigned, using the exclusive amount for scheduling data flows of at least one of the other operators. In this way, if there are unused resources in the exclusive amount of resources of one operator, these remaining resources may be filled with data (flows) of other operators, in accordance with the priority identifier elements of that data flows. In this way, wasting of unused resources may be avoided, thus increasing the efficiency of the overall scheduling process (for all operators).

In a further variant, the shared amount of the radio resources and the exclusive amount of the radio resources are dynamically assigned to different parts of the frequency spectrum. In a simple example, two operators use their pooled spectrums corporately and every operator has licensed the same amount of spectrum, i.e. every operator has the right to use 50% of the total spectrum. To increase the efficiency of the use of the available radio resources, the operators are not limited to use a fixed part of the spectrum. Thus, instead of a static assignment, the scheduler may assign the radio resources over the full spectrum. This gives the scheduler the freedom to perform the scheduling according to the actual channel conditions, e.g. by performing frequency selective scheduling.

Another aspect of the invention relates to a base station for shared use of the same radio resources, in particular of the same frequency spectrum, by at least two operators, comprising: a scheduling unit, being adapted for assigning an exclusive amount of the radio resources to each of the operators, each exclusive amount to be used for scheduling data flows of only a single operator, wherein the scheduling unit is further adapted for assigning a shared amount of the radio resources to the operators, the shared amount being used for scheduling data flows of different operators, and wherein the scheduling unit is further adapted for scheduling the data flows of the at least two operators using at least the exclusive amounts of the radio resources assigned to the operators.

The base station as described above is shared by different operators, each operator typically licensing a fixed (exclusive) amount of radio resources. The aim of the scheduling mechanism provided by the (physical / low level) scheduling unit described above is to perform the scheduling among the operators according to the physical resources, as operators pay their license fees based on the physical resources, respectively on the licensed spectrum.

In one embodiment, the scheduling unit is further adapted to schedule data flows of at least one operator which do not fit into the exclusive amount assigned to that operator in the shared amount of the radio resources. Thus, in case that the exclusive amount of the radio resources assigned to an operator is insufficient for a given scheduling time slot, data flows of that operator are also scheduled in the shared amount of the radio resources.

In another embodiment, the base station further comprises: an upper layer scheduling unit being adapted to provide priority identifier information for the data flows of a respective operator, the scheduling unit being further adapted to schedule the data flows of the respective operator in accordance with the priority identifier information. In other words, each operator uses its own upper layer scheduling unit for scheduling the data flows of that operator to/from the end users associated with that operator according to the quality of service constrains of the data flows, the buffer level etc. In particular, for giving mobile network operators maximum degree of freedom to setup and maintain their own feature set and to take benefit of improved efficiency of shared resources, the upper level scheduler may be implemented in a virtual base station.

As indicated above, the principle of base station virtualization is that one physical base station hosts two or more virtual base stations. Thus, every operator owns one virtual base station and may run its own operational software on that virtual basestation. This gives the operator the opportunities to establish individual services, use his own quality of services types, etc.

In a further embodiment, the shared amount of the radio resources comprises an equally shared portion which is used for scheduling data flows of different operators with equal priority. As indicated above, in the equally shared portion, radio resources are scheduled in an equal manner among the operators based on a priority information associated with the data flows which is provided by the upper layer scheduler.

In one embodiment, the shared amount of the radio resources comprises at least one priority shared portion which is used for scheduling data flows of different operators based on a priority defined for each operator. In a priority shared portion, data flows of the operator with the highest priority are scheduled first. The priorities which is assigned to a specific operator in the priority shared portion of the shared amount typically depends on the license conditions of that operator.

In a further embodiment, the scheduling unit is adapted to use the exclusive amount assigned to an operator for scheduling data flows of at least one of the other operators in case that the exclusive amount is not filled with data flows of the operator to which it is assigned. As indicated above, in this way, the efficiency of the overall scheduling for different operators sharing the same resources can be improved.

In a further embodiment, the scheduling unit is adapted to dynamically assign the shared amount and the exclusive amount of the radio resources to different parts of the frequency spectrum. One advantage of the scheduling process described herein is that the amount of radio resources reserved for a particular operator may be assigned dynamically, i.e. independently of a pre-defined frequency range. In this way, although the amount of radio resources reserved for one operator remains the same during different scheduling time slots, the frequency range reserved for an operator may change from scheduling time slot to scheduling time slot. Of course, if regulations require to associate a fixed portion of the spectrum to each operator, it is also possible to bind the respective amounts of resources to specific (fixed) parts of the frequency spectrum.

Another aspect of the invention relates to a wireless communication network comprising at least one base station of the type described above. As indicated above, the efficiency of a wireless network may be improved and costs may be reduced when two or more operators make use of the same infrastructure (base station) and share the same radio resources. As indicated above, the two tier scheduling using a lower layer scheduler for scheduling among the operators and individual upper layer schedulers for each operator (possibly in combination with the concept of virtual base stations) which are responsible for scheduling among the end user traffic flows of that operator allows to provide a fair resource scheduling among all operators.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of a wireless network with a base station shared by two operators,
- **Fig. 2**: shows a flow chart of a first step of a scheduling process performed in the base station of Fig.1, in which scheduling data flows to exclusive amounts of radio resources of the two operators is performed,
- **Fig.3**: shows a flow chart of a second step of the scheduling process, wherein scheduling of a priority shared portion of a shared amount of resources is performed,
- **Fig.4**: shows a flow chart of a third step of the scheduling process in which scheduling of an equally shared portion of a shared amount of resources is performed, and
- **Fig.5**: shows a flow chart of a fourth step of the scheduling process in which remaining radio resources are scheduled.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

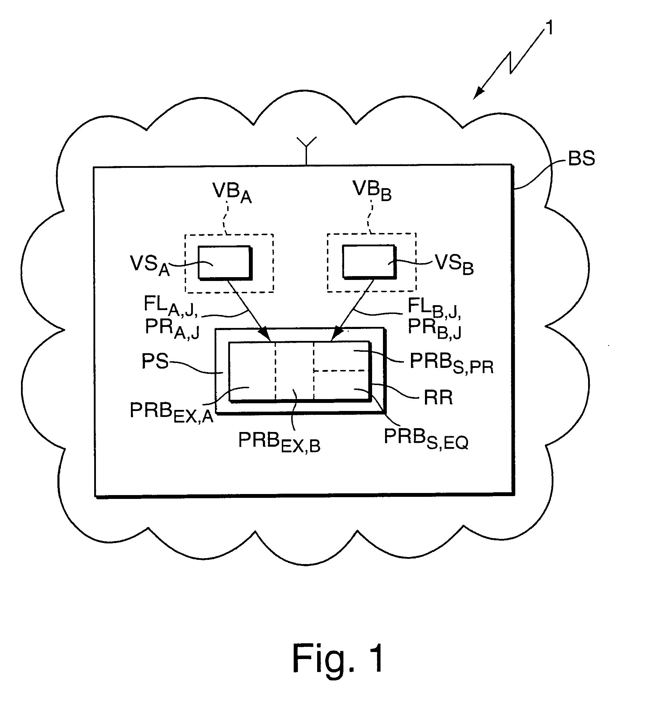

**Fig. 1** shows a wireless communication network 1 in accordance with the LTE standard which comprises a plurality of base stations BS, only one of these being shown for the sake of simplicity. The base station BS is shared by two different operators OP_{A}, OP_{B} using the principle of virtual base stations, i.e. the physical base station BS hosts two virtual base stations VB_{A}, VB_{B}, each having its own virtual scheduler VS_{A}, VS_{B}. One skilled in the art will appreciate that although the present example is given with respect to a radio network 1 according to the LTE standard, the principles described herein are also applicable to other radio technologies such as WiMAX.

Each virtual scheduler VS_{A}, VS_{B} schedules data flows FL_{A, J}, FL_{B,J} (wherein J designates a specific data flow J= 1, ..., N, and wherein N designates the total number of data flows of a specific operator in a scheduling time slot) to end users associated with a respective operator OP_{A}, OP_{B} according to the quality of service constrains of the data flows FL_{A},_{J}, FL_{B},_{J}, the buffer level and possibly on an abstract transfer condition ATC which is reported by the physical domain of the base station BS. Each virtual scheduler VS_{A}, VS_{B} may be implemented as a round robin, proportional fair or other scheduler, depending on the implementation by a specific operator OP_{A}, OP_{B}.

According to the scheduling decision of the respective virtual scheduler VS_{A}, VS_{B}, the transferred data is packetized and tagged with a so-called priority identifier PR_{A},_{J}, PR_{B},_{J}. The priority identifier PR_{A},_{J}, PR_{B},_{J} is a function of the QoS constrains, buffer level and/or ATC. As the mechanism of the virtual scheduler VS_{A}, VS_{B} of the virtual base station VB_{A}, VB_{B} is operator-specific, the principles used to generate a respective priority identifier PR_{A},_{J}, PR_{B},_{J} will not be detailed herein.

The concept of one virtual base station VB_{A}, VB_{B} per operator OP_{A}, OP_{B} gives the operator OP_{A}, OP_{B} a maximum degree of freedom to install his own scheduling mechanisms for an optimal support of his specific services. It will be understood, however, that the principles described herein are not limited to the concept of virtual base stations. In other words, the virtual scheduler VS_{A}, VS_{B} as described herein is just one implementation of an upper layer scheduler which is responsible for scheduling traffic flows to/from e.g. end users (subscribers) of a specific operator, whereas a common lower layer scheduler PS (also referred to as physical domain scheduler) is responsible for the scheduling of traffic among the operators OP_{A}, OP_{B}.

For this purpose, after the completion of the scheduling decision in the respective virtual scheduler VS_{A}, VS_{B} of the respective operator OP_{A}, OP_{B}, the data flows FL_{A,J}, FL_{B,J} are transferred together with the priority identifiers PR_{A,J}, PR_{B,J} to the physical domain scheduler PS for further processing.

The priority identifier PR_{A,J}, PR_{B,J} is the primary index for the physical domain scheduler PS. The data flows FL_{A,J}, FL_{B,J} with the highest priority identifiers PR_{A,J}, PR_{B,J} are scheduled first and the data flows FL_{A,J}, FL_{B,J} with lowest priority identifiers are scheduled last. This ensures that the data is scheduled according to the decisions of the virtual scheduler VS_{A}, VS_{B}. However, despite the decision of the virtual scheduler VS_{A}, VS_{B}, the physical scheduler PS has to schedule the data according to the business relationships and regulations of the different operators OP_{A}, OP_{B} which use the base station BS, and the actual channel conditions, as will be explained in the following.

For a fair scheduling of radio resources RR among the operators OP_{A}, OP_{B}, resource credits are defined. For this purpose, different classes of credits (see below) are be defined, preferably as a percentage, i.e. as a rate/amount of the total amount of radio resources RR which are available. In the following, the radio resources RR will be identified with the available radio/frequency spectrum for the sake of simplicity. The percentage of the overall radio resources RR is specified based on the smallest entity of radio resources RR of the given radio technology, which is the physical resource block PRB in the present example of a radio network in accordance with the LTE technology.

In the following, three different types of resource credits (PRB credits) used for the scheduling will be defined:
Exclusive PRB credits PRB_{EX},_{A}, PRB_{EX},_{B}: This type of credit defines the amount of PRBs (in %) which is exclusively reserved to one particular operator OP_{A},
OP_{B}. Remaining resources (PRBs) of this credit type may only be used by other operators OP_{B}, OP_{A} if no data from the particular operator OP_{A}, OP_{B} to which it is assigned is available in a given scheduling timeslot.

Equally shared PRB credits PRB_{S},_{EQ}: This type of credit defines an amount of PRBs (in %) which may be used by several operators OP_{A}. The radio resources RR of this type of credits are scheduled in an equal manner among the operators OP_{A}, OP_{B}. For the data flows FL_{A,J}, FL_{B,J} associated with a single operator OP_{A}, OP_{B}, prioritization is done by the priority identifier information element PR_{A,J}, PR_{B,J} of the respective virtual scheduler VS_{A}, VS_{B}.

Priority shared PRB credits PRB_{S},_{PR}: This type of credit also defines an amount of PRBs (in %) which may be used by several operators OP_{A}, OP_{B}. The radio resources RR of this type of credits are scheduled in a prioritized manner among the operators OP_{A}, OP_{B}. Thus, the data of an operator (e.g. OP_{A}) having the highest priority is scheduled first, whereas the data of an operator having lower priority (e.g. OP_{B}) is scheduled later on. It will be understood that two or more priority shared PRB credits may be defined, which differ in the assignment of the priorities to the operators, e.g. a first priority shared credit type defined as PRB_{S,PR(a>b)} indicating that data from the first operator OP_{A} is scheduled before data of the second operator OP_{B}, and a second priority shared credit type defined as PRB_{S,PR(a<b)} indicating that data of the second operator OP_{A} is scheduled before data of the first operator OP_{B}. In either case, the data flows FL_{A,J}, FL_{B,J} associated with a single operator OP_{A}, OP_{B} are scheduled according to the priority identifier information element PR_{A,J}, PR_{B,J} of the respective virtual scheduler VS_{A}, VS_{B}.

Thus, the available radio resources RR are assigned either to the exclusive amount PRB_{EX,A}, PRB_{EX,B} attributed to a single operator OP_{A}, OP_{B}, or to a shared amount PRBₛ which is shared by several operators OP_{A}, OP_{B}. The shared amount RRBₛ comprises either an equally shared portion PRB_{S,EQ}, one or more priority shared portions PRB_{S,PR}, or a combination of both.

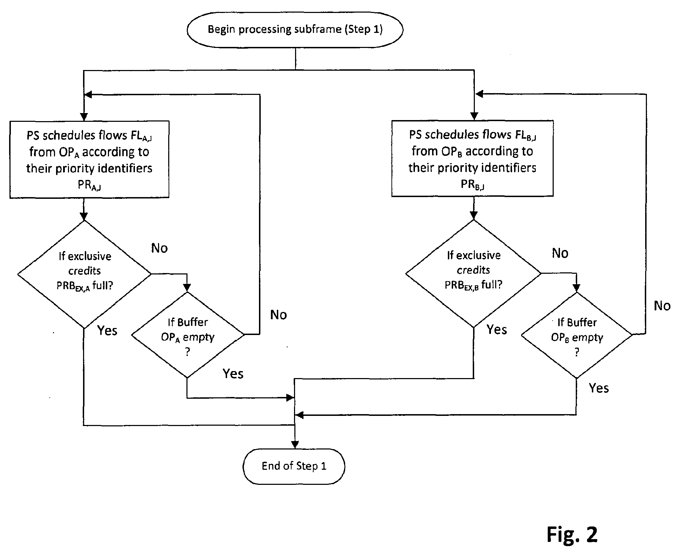

In the following, a detailed description of the scheduling process of the physical domain scheduler PS in a given scheduling time slot (specific to a given radio technology, being one subframe in the LTE standard) will be described with reference to Figs. 2 to 5:

In a first scheduling step (Step1) at the beginning of the scheduling (shown in Fig. 2), the physical domain scheduler PS tries to schedule the incoming data flows FL_{A,J} from the virtual basestation VS_{A} of the first operator OP_{A} according to the priorities given in the respective priority identifier information element PR_{A},_{J} and on physical constrains such as channel conditions. The data flows FL_{A},_{J} are scheduled in one scheduling time slot up to the maximum given exclusive PRB credits PRB_{EX},_{A} of the operator OP_{A} or until no more data is available in the current time slot (i.e. the corresponding buffer of the respective operator OP_{A} is empty). If this is the case, the physical domain scheduling unit PS performs the same process for the second operator OP_{B}. As can be gathered from Fig. 2, the physical domain scheduling unit PS may perform the scheduling process also in parallel for both operators OP_{A}, OP_{B}.

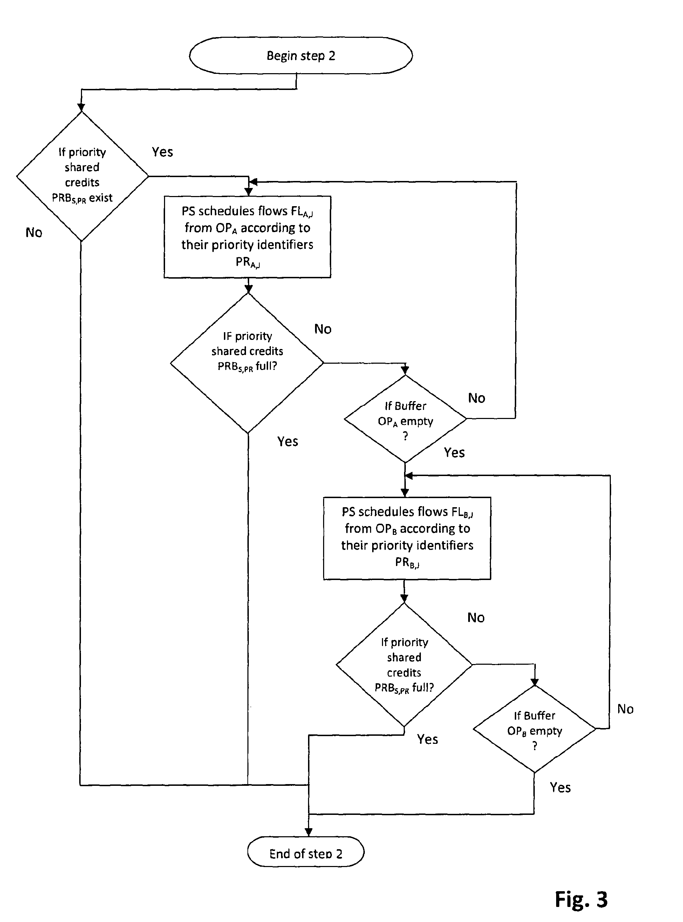

In a second scheduling step 2 shown in Fig. 3, if priority shared PRB credits PRB_{S},_{PR} are defined, the scheduling unit PS schedules the PRBs of the operator having the highest priority (in the present example the first operator OP_{A}) first and then schedules data from the other operators (in the present example the second operator OP_{B}) up to the credit maximum or until no more data is available for the current scheduling time slot, i.e. until the respective buffer associated with the operator OP_{A}, OP_{B} is empty.

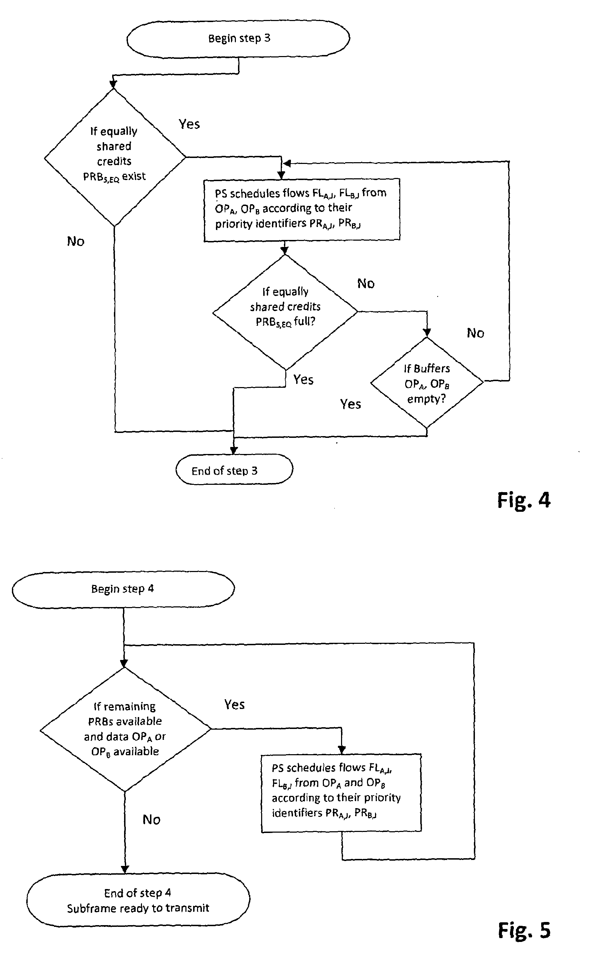

As is shown in Fig. 4, in a third scheduling step 3, if equally shared PRB credits PRB_{S},_{PR} are configured, the scheduling unit PS schedules the PRBs from different operators OP_{A}, OP_{B} in an equal manner according to their priority identifier information elements PR_{A},_{J}, PR_{B},_{J} up to the credit maximum or until no more data is available for the current scheduling time slot (i.e. the respective buffers of the two operators OP_{A}, OP_{B} are empty).

In a fourth step (cf. Fig. 5), if there are still unused radio resources RR available in the scheduling time slot, the scheduling unit PS fills these remaining resources (in the present case: PRBs) with data according to their priority identifier information elements PR_{A,J}, PR_{B},_{J}. In particular, the PRBs which are to be used exclusively by a single operator OP_{A}, OP_{B} may be used also by the other operator OP_{B}, OP_{A}.

It will be understood that depending on the assignment of the overall radio resources RR which is set up for the operators OP_{A}, OP_{B}, one or more of the steps 2 to 4 of the scheduling process described above may be omitted. Some examples of assignments of radio resources RR to the operators OP_{A}, OP_{B} depending on the licensed spectrum and the business relations between the two operators OP_{A}, OP_{B} will be given below:
Example 1: exclusive PRB Credit PRB_{EX},_{A} for the first operator OP_{A} = 50%, exclusive PRB Credit PRB_{EX},_{B} for the second operator OP_{B} = 50%.
Example 2: exclusive PRB Credit PRB_{EX},_{A} for the first operator OP_{A} = 30%, exclusive PRB Credit PRB_{EX,B} for the second operator OP_{B} = 30%, equally shared PRB Credit PRB_{S,EQ} (with equal priority (a = b) for both operators OP_{A},OP_{B}) = 40%.
Example 3: exclusive PRB Credit PRB_{EX},_{A} for the first operator OP_{A} = 30%, exclusive PRB Credit PRB_{EX},_{B} for the second operator OP_{B} = 30%, priority shared PRB Credit PRB_{S,PR(a>b)} = 20%, priority shared PRB Credit PRB_{S,PR(a<b)} = 20%.

In the third example, there are two priority shared portions PRB_{S,PR(a>b)}, PRBs, PR(a<b). As indicated above, the first one is used for scheduling data of the first operator OP_{A} before data of the second operator OP_{B} is scheduled, and the second one is used for scheduling data of the second operator OP_{B} before scheduling data of the first operator OP_{A}. It will be understood that this process may be easily generalized to the case of three or more operators.

In the description given above, the PRB credits PRB_{EX,A}, PRB_{EX,B}, PRB_{S,EQ}, PRB_{S,PR} are in general not related to fixed frequency ranges, i.e. fixed parts of the overall spectrum. Rather, the scheduling unit PS dynamically assigns the PRB credits to frequency ranges which may change from scheduling time slot to scheduling time slot depending e.g. on the channel conditions, etc.

Of course, if regulations require fixed spectrum portions per operator OP_{A}, OP_{B}, the PRB credits may be bound to fixed ranges of the transmission spectrum, as in the following example:
Example 4: Total spectrum 20 MHz, two operators OP_{A}, OP_{B}, exclusive PRB Credits PRB_{EX},_{A} of the first operator OP_{A} = 0-5MHz, exclusive PRB Credits PRB_{EX,B} of the second operator OP_{B} = 15-20MHz, priority shared PRB Credits PRB_{S,PR(a>b)} = 5-10MHz, priority shared PRB Credits PRB_{S,PR(a<b)} = 10-15MHz.

In summary, in the way described above, high flexibility is provided for the operators to schedule their user traffic according to the quality of service constraints, i.e. every operator may implement its own scheduling mechanisms. On the other hand, the two-tier solution described herein provides a flexible and fair radio resource assignment between the operators according to their business relationships and regulations. In particular, the two-tier scheduling proposed herein provides more flexibility than typical MVNO (Mobile Virtual Network Operator) solutions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for scheduling data flows (FL_{A,J}, FL_{B,J}) of at least two operators (OP_{A}, OP_{B}) sharing the same radio resources (RR), in particular sharing the same frequency spectrum, the method comprising:
assigning an exclusive amount (PRB_{EX,A}, PRB_{EX,B}) of the radio resources (RR) to each of the operators (OP_{A}, OP_{B}), each exclusive amount (PRB_{EX,A}, PRB_{EX,B}) to be used for scheduling data flows (FL_{A,J}, FL_{B},_{J}) of only a single operator (OP_{A}; OP_{B}), and
assigning a shared amount (PRBₛ) of the radio resources (RR) to the operators (OP_{A}, OP_{B}), the shared amount (PRB_{S}) being used for scheduling data flows (FL_{A,J}, FL_{B,J}) of different operators (OP_{A}, OP_{B}), wherein
the data flows (FL_{A,J}, FL_{B},_{J}) of the at least two operators (OP_{A}, OP_{B}) are scheduled using at least the exclusive amounts (PRB_{EX,A}, PRB_{EX,B}) of the radio resources (RR) assigned to the operators (OP_{A}, OP_{B}).

2. Method according to claim 1, further comprising: in case that the exclusive amount (PRB_{EX,A} PRB_{EX,B}) of the radio resources (RR) assigned to an operator (OP_{A}, OP_{B}) is insufficient, scheduling data flows (FL_{A,J}, FL_{B,J}) of that operator (OP_{A}, OP_{B}) also in the shared amount (PRB_{S}) of the radio resources (RR).

3. Method according to claim 1 or 2, wherein the data flows (FL_{A,J}, FL_{B,J}) of each operator (OP_{A}, OP_{B}) are scheduled in accordance with a priority identifier information (PR_{A},_{J}, PR_{B},_{J}) associated with the data flows (FL_{A},_{J}, FL_{B,J}), the priority identifier information (PR_{A,J}, PR_{B,J}) being provided by the operators (OP_{A}, OPs).

4. Method according to any one of the preceding claims, wherein the shared amount (PRB_{S}) comprises an equally shared portion (PRB_{S.EQ}) which is used for scheduling data flows (FL_{A,J}, FL_{B,J}) of different operators (OP_{A}, OP_{B}) with equal priority.

5. Method according to any one of the preceding claims, wherein the shared amount (PRB_{S}) comprises at least one priority shared portion (PRB_{S,PR}) which is used for scheduling data flows (FL_{A,J}, FL_{B,J}) of different operators (OP_{A}, OP_{B}) based on a priority defined for each operator (OP_{A}, OP_{B}).

6. Method according to any one of the preceding claims, further comprising: in case that an exclusive amount (PRB_{EX,A}, PRB_{EX,B}) of radio resources (RR) is not filled with data flows (FL_{A,J}, FL_{B,J}) of the operator (OP_{A}, OP_{B}) to which it is assigned, using the exclusive amount (PRB_{EX,A}, PRB_{EX,B}) for scheduling data flows (FL_{B,J}, FL_{A,J}) of at least one of the other operators (OP_{A}, OP_{B}).

7. Method according to any one of the preceding claims, wherein the shared amount (PRB_{S}) and the exclusive amount (PRB_{EX,A}, PRB_{EX,B}) of the radio resources (RR) are dynamically assigned to different parts of the frequency spectrum.

8. Base station (BS) for shared use of the same radio resources (RR), in particular of the same frequency spectrum, by at least two operators (OP_{A}, OP_{B}), comprising:
a scheduling unit (PS), being adapted for:
assigning an exclusive amount (PRB_{EX,A}, PRB_{EX,B}) of the radio resources (RR) to each of the operators (OP_{A}, OP_{B}), each exclusive amount (PRB_{EX,A}, PRB_{EX,B}) to be used for scheduling data flows (FL_{A,J}, FL_{B,J}) of only a single operator (OP_{A}, OP_{B}), and
assigning a shared amount (PRB_{S}) of the radio resources (RR) to the operators (OP_{A}, OP_{B}), the shared amount (PRB_{S}) being used for scheduling data flows (FL_{A,J}, FL_{B,J}) of different operators (OP_{A}, OP_{B}), the scheduling unit (PS) being further adapted for:
scheduling the data flows (FL_{A,J}, FL_{B,J}) of the at least two operators (OP_{A}, OP_{B}) using at least the exclusive amounts (PRB_{EX,A}, PRB_{EX,B}) of the radio resources (RR) assigned to the operators (OP_{A}, OP_{B}).

9. Base station according to claim 8, wherein the scheduling unit (PS) is further adapted to schedule data flows (FL_{A,J}, FL_{B,J}) of at least one operator (OP_{A}, OP_{B}) which do not fit into the exclusive amount (PRB_{EX,A}, PRB_{EX},_{B}) assigned to that operator (OP_{A}, OP_{B}) using the shared amount (PRB_{S}) of the radio resources (RR).

10. Base station according to claim 8 or 9, further comprising:
an upper layer scheduling unit (VS_{A}, VS_{B}) being adapted to provide priority identifier information (PR_{A,J}, PR_{B,J}) for the data flows (FL_{A,J}, FL_{B,J}) of a respective operator (OP_{A}, OP_{B}),
the scheduling unit (PS) being further adapted to schedule the data flows (FL_{A,J}, FL_{B,J}) of the respective operator (OP_{A}, OP_{B}) in accordance with the priority identifier information (PR_{A,J}, PR_{B,J}).

11. Base station according to any one of claims 8 to 10, wherein the shared amount (PRB_{S}) of the radio resources (RR) comprises an equally shared portion (PRB_{S,EQ}) which is used for scheduling data flows (FL_{A,J}, FL_{B,J}) of different operators (OP_{A}, OP_{B}) with equal priority.

12. Base station according to any one of claims 8 to 11, wherein the shared amount (PRB_{S}) of the radio resources (RR) comprises at least one priority shared portion (PRB_{S,PR}) which is used for scheduling data flows (FL_{A,J}, FL_{B,J}) of different operators (OP_{A}, OP_{B}) based on a priority defined for each operator (OP_{A}, OP_{B}).

13. Base station according to any one of claims 8 to 12, wherein the scheduling unit (PS) is adapted to use the exclusive amount (PRB_{EX,A}, PRB_{EX,B}) assigned to an operator (OP_{A}, OP_{B}) for scheduling data flows (FL_{B,J}, FL_{A,J}) of at least one of the other operators (OP_{B}, OP_{A}) in case that the exclusive amount (PRB_{EX,A}, PRB_{EX,B}) is not filled with data flows (FL_{A,J}, FL_{B,J}) of the operator (OP_{A}, OP_{B}) to which it is assigned.

14. Base station according to any one of claims 8 to 13, wherein the scheduling unit (PS) is adapted to dynamically assign the shared amount (PRB_{S}) and the exclusive amount (PRB_{EX,A}, PRB_{EX,B}) of the radio resources (RR) to different parts of the frequency spectrum.

15. Wireless communication network (1), comprising:
at least one base station (BS) according to any one of claims 8 to 14.
